# EUROPÄISCHE PATENTSCHRIFT

(11) **EP 4 241 466 B1**
(45) Veröffentlichungstag und Bekanntmachung des Hinweises auf die Patenterteilung: **29.01.2025**
(21) Anmeldenummer: 21810520.3
(22) Anmeldetag: 08.11.2021
(51) Int. Cl.: H04W 4/02, H04W 4/46

(54) **VALIDIERUNG EINER V2X-NACHRICHT**
VALIDATION OF A V2X MESSAGE
VALIDATION D'UN MESSAGE V2X

(30) Priorität: 09.11.2020 AT 509662020
(43) Veröffentlichungstag der Anmeldung: 13.09.2023
(73) Patentinhaber: AVL List GmbH, 8020 Graz (AT)
(72) Erfinder: PRILLER, Peter, 8111 Gratwein-Straßengel (AT)
(74) Vertreter: Patentanwälte Pinter & Weiss OG
(86) Internationale Anmeldenummer: PCT/AT2021/060417
(87) Internationale Veröffentlichungsnummer: WO 2022/094647

(56) Entgegenhaltungen:
- DE-A1- 102013 217 869
- US-A1- 2017 365 171
- US-A1- 2019 068 639
- KAH HENG NG ET AL: "Efficient Multielement Ray Tracing With Site-Specific Comparisons Using Measured MIMO Channel Data", IEEE TRANSACTIONS ON VEHICULAR TECHNOLOGY, IEEE, USA, vol. 56, no. 3, 1 May 2007 (2007-05-01), pages 1019 - 1032, XP011181369, ISSN: 0018-9545, DOI: 10.1109/TVT.2007.895606

## Beschreibung

Die gegenständliche Erfindung betrifft ein Verfahren zur Validierung einer durch einen Sender gesendeten und durch einen Empfänger empfangenen V2X-Nachricht, wobei der Emfpfänger an einem Fahrzeug angeordnet ist und beim Empfang der V2X-Nachricht zumindest eine tatsächliche physikalische Empfangssignaleigenschaft der V2X-Nachricht ermittelt wird und wobei aus der V2X-Nachricht eine behauptete Senderposition des Senders ermittelt wird. Weiters betrifft die gegenständliche Erfindung eine Validierungsvorrichtung zur Validierung einer durch einen Sender gesendeten und durch einen, an einem Fahrzeug angeordneten, Empfänger empfangenen V2X-Nachricht, umfassend eine Extraktionseinheit, welche ausgestaltet ist, eine behauptete Senderposition des Senders aus der V2X-Nachricht zu ermitteln, wobei eine Analyseeinheit vorgesehen ist, die ausgestaltet ist, beim Empfang der V2X-Nachricht zumindest eine tatsächliche physikalische Empfangssignaleigenschaft zu ermitteln.

Ein Austausch von Information im Straßenverkehr kann besonders rasch erfolgen, wenn die Kommunikation, d.h. die Übertragung von Nachrichten, automatisiert ist. Eine allgemeine Kommunikation eines Fahrzeugs mit einem anderen Teilnehmer wird als V2X-Kommunikation (Vehicle-to-X-Kommunikation) oder C2X-Kommunikation (Car-to-X-Kommunikation) bezeichnet. Es wird auch zwischen den unterschiedlichen Teilnehmern unterschieden. Kommunikation zwischen einem Fahrzeug und weiteren Fahrzeugen wird als V2V-Kommunikation (Vehicle-to-Vehicle-Kommunikation) oder C2C-Kommunikation (Car-to-Car-Kommunikation) bezeichnet, wogegen Kommunikation zwischen einem Fahrzeug und Infrastruktur und/oder externen IT-Systemen und/oder externen IT-Services als V2I-Kommunikation (Vehicle-to-Infrastructure-Kommunikation) bezeichnet wird. Kommunikation zwischen einem Fahrzeug und Cloud-Infrastruktur wird hingegen oftmals als V2C-Kommunikation (Vehicle-to-Cloud-Kommunikation) bezeichnet, Kommunikation zwischen einem Fahrzeug und Endgeräten (z.B. Smartphones) anderer Verkehrsteilnehmer (Fußgänger, Radfahrern, etc.) als V2P-Kommunikation (Vehicle-to-Person-Kommunikation oder Vehicle-to-Pedestrian-Kommunikation).

Es ist für die genannten Kommunikationsarten einerseits ein WLAN-ähnlicher IEEE 802.11p Standard definiert, welcher eine Nachrichtenübertragung bei einer Frequenz im Bereich von 5,9 GHz ermöglicht. Andererseits ist zudem ein auf Mobilfunk basierter Ansatz C-ITS für 4G (LTE) und 5G Netze definiert, welcher eine Nachrichtenübertragung im Frequenzbereich von 1,8 bis 3,5 GHz ermöglicht. In den genannten Standards sind sogenannte CAM ("common awareness message") als V2V-Nachrichten definiert, wobei Fahrzeuge unter anderem ihre Position, Richtung und Geschwindigkeit mehrmals pro Sekunde, z.B. 10-mal pro Sekunde, aussenden.

Eine V2X-Nachricht kann grundlegend Information bezüglich des Senders (Fahrzeug, Infrastruktur etc.) selbst und/oder bezüglich anderer Fahrzeuge umfassen, z.B. bezüglich der Position, der Geschwindigkeit oder der (unmittelbar geplanten) Trajektorie der betreffenden Fahrzeuge. Diese Information wurde beispielsweise vorab vom Fahrzeug selbst ermittelt, oder via V2X-Nachricht von anderen Teilnehmern erhalten. Weiters kann die Nachricht auch Information zur Infrastruktur, z.B. bezüglich Position/Anordnung von Straßen, Ampeln, Baustellen etc. umfassen, wobei auch der zugehörige Status (gesperrten Fahrspuren, aktuelle Ampelphasen etc.) als Information enthalten sein kann. Die V2X-Nachricht wird als Broadcast an alle (potentiellen) Empfänger innerhalb der Senderreichweite des Senders (üblicherweise einige zehn bis einige hundert Meter) gesendet. Daraus ergibt sich, dass durch das Fahrzeug nur lokale, d.h. im Bereich der Senderreichweite befindliche und damit auch relevante Information, empfangen werden.

Die durch einen Empfänger eines Fahrzeugs empfangene V2X-Nachricht, d.h. die darin enthalten Information, kann von weiteren Systemen des Fahrzeugs, z.B. von Fahrerassistenzsysteme (ADAS) und/oder teilautomatisierten/vollautomatisierten Fahrsystemen (AD) verwendet und/oder verarbeitet werden. Beispielsweise kann die empfangene Information dazu dienen, Objekte (z.B. Fahrzeuge, Hindernisse etc.) in der Umgebung des Fahrzeugs zu erkennen, und somit die im Fahrzeug verbauten Sensoren (Video, Radar, Lidar etc.) zu unterstützen. Dies ist insbesondere vorteilhaft, da die V2X-Nachricht auch Information bezüglich Objekte enthalten kann, welche von den im Fahrzeug verbauten Sensoren nicht detektiert werden können. Dies kann auf eine begrenzte Reichweite oder Verdeckungen (non line-of-sight, NLS) der Sensoren oder auch auf störende Umgebungsbedingungen (z.B. Wetterbedingungen) zurückzuführen sein. Mittels V2X-Nachricht empfangene Information kann somit dazu dienen, gemeinsam mit vorhandenen Sensoren ein Lagebild hinsichtlich der Umgebung des Fahrzeugs zu ergänzen. Auch kann die in der V2X-Nachricht enthaltene Information dem Fahrer angezeigt werden, wobei die Information auch aufbereitet werden kann. So kann dem Fahrer beispielsweise via V2X-Nachricht empfangene Information zu Fahrbahneinschränkungen im Bereich von Baustellen angezeigt werden.

Die empfangene V2X-Nachricht kann auch Information enthalten, die von weiteren Teilnehmern (z.B. Fahrzeugen) zur Verfügung gestellt wurde. Durch eine gesamtheitliche Betrachtung der Information von V2X-Nachrichen einer Mehrzahl von Teilnehmern kann ein dichtes Bild des lokalen Szenarios erzeugt werden, womit z.B. kollaboratives Fahren (collective perception message (CPM)) unterstützt werden kann.

Es besteht jedoch die Gefahr, dass Information, die mittels einer V2X-Nachricht empfangen wurde, unzuverlässig oder gar falsch ist. Es kann beispielsweise zur Durchführung eines Angriffs absichtlich falsche Information übertragen werden. So kann z.B. ein nicht real vorhandenes Objekt vorgetäuscht werden, um im empfangenden Fahrzeug eine vom Angreifer gewünschte Reaktion zu erzeugen. Natürlich kann die Information auch aus anderen Gründen, d.h. "irrtümlich", falsch sein. In beiden Fällen kann basierend auf falscher Information eine Fehleinschätzung einer Fahrsituation erfolgen. Damit kann der Fall eintreten, dass ineffiziente, oder sogar gefährliche Aktionen in ADAS/AD-Systemen ausgelöst werden. Es sind beispielsweise Fälle bekannt, in denen eine Notbremsfunktion eines Fahrzeugs durch eine gefälschte Anweisung aktiviert wurde.

Aus diesem Grund ist es erstrebenswert im empfangenden Fahrzeug die Vertrauenswürdigkeit (trustworthiness) der empfangenen V2X-Nachricht zu bewerten, um auf die Gültigkeit der mit der V2X-Nachricht übertragenen Information zu schließen, was auch als "misbehavior detection" bezeichnet wird.

Eine bekannte Methode betrifft eine Überprüfung der Integrität der V2X-Nachricht, z.B. unter Verwendung von Prüfsummen oder Formatvorschriften. Diese Methode dient primär dazu Übertragungsfehler zu erkennen und ist damit nur bedingt zur Validierung von V2X-Nachrichten geeignet, da von einem Angreifer formal korrekt formulierte, aber dennoch gefälschte V2X-Nachrichten nicht erkannt werden.

Eine weitere Methode sieht vor, dass sich der Sender authentifiziert, z.B. indem in der V2X-Nachricht eine Signatur mit einem Zertifikat als Information übertragen wird. Diese Methode kann jedoch von einem Angreifer ausgehebelt werden, sobald dieser Zugriff auf die gültige Signatur eines beliebigen Teilnehmers erhält. Wird auf diese Art ein Teilnehmer kompromittiert und die Kompromittierung nicht erkannt, so bleibt die Signatur gültig - bis die Kompromittierung erkannt und das Zertifikat für ungültig erklärt wird. Doch selbst nach Bekanntwerden einer Kompromittierung ist es technisch schwierig, das Zertifikat des einzelnen Teilnehmers ungültig zu erklären und diese Information (weltweit an jeden Teilnehmer) zu verteilen.

Eine andere Methode nutzt eine einfache Plausibilitätsüberprüfung der Empfangssignalstärke der empfangenen V2X-Nachricht. So kann eine gemessene Empfangssignalstärke (RSSI - Received Signal Strength Indication) mit einer geschätzten Empfangssignalstärke verglichen werden. Die Schätzung basiert auf einer vom Sender gemeldeten Senderposition und einem daraus errechneten Abstand zum Empfänger unter Verwendung eines Kanal-Dämpfungs-Modells. Als Kanal-Dämpfungs-Modell ist beispielsweise das Abstandsgesetz vorgesehen, welches besagt, dass die empfangene Signalstärke invers proportional zum Quadrat des Abstands ist. Damit ergibt sich jedoch eine Mehrzahl an Positionen des Empfängers, welche diese Plausibilitätsprüfung bestehen. Daher kann eine derartige Plausibilitätsprüfung von einem Angreifer ausgehebelt werden, indem er aus einer Position sendet, die zwar nicht mit der angegebenen Senderposition übereinstimmt, jedoch die Plausibilitätsprüfung erfüllt. Auch kann die Signalstärke derart angepasst werden, dass die Plausibilitätsprüfung erfüllt wird. Die DE 10 2017 124 905 A1 beschreibt eine Validierung einer empfangenen Nachricht auf Basis eines Vergleichs einer geschätzten Empfangssignalstärke mit einer tatsächlich auftretenden Empfangssignalstärke, wobei die geschätzte Empfangssignalstärke auf einem geschätzten offenen Pfadsignalstärkeverlust basiert. Ebenso offenbart die US 2017/0365171 A1 z.B. ein Verfahren für einen Plausibilitätscheck in einer dynamischen Umgebung, in welcher ein Fahrzeug mit anderen, entfernten Fahrzeugen mittels V2X-Nachrichten kommuniziert, um nicht plausible Positionsdaten von Fahrzeugen zu erkennen. Dazu wird in erster Linie die Empfangsstärke in Form des "Received Signal Strength Indicator" (RSSI) verwendet und mit einem mittels eines Modells abgeschätzten Wert für die Empfangsstärke verglichen.

Eine besonders rechenintensive Methode ist die Prüfung der Plausibilität der empfangenen Information, indem anhand einer Mehrzahl von zu verschiedenen Zeitpunkten gemeldeten Positionen ein Bewegungsmodell des Senders ermittelt wird. Das Bewegungsmodell wird mit plausiblen Annahmen, wie z.B. einer Maximalgeschwindigkeit, einem Straßenverlauf etc. verglichen und so auf Plausibilität geprüft. Diese Methode erfordert im empfangenden Fahrzeug erheblichen Rechenaufwand, womit oftmals nur eine stark vereinfachte Ausführung möglich ist. Eine Vereinfachung der Kriterien kommt natürlich wiederum einem Angreifer entgegen, welcher lediglich gefälschte Information mit (einigermaßen) plausibler Geschwindigkeit und Trajektorie erzeugen muss.

Die DE 2009 045 709 A1 offenbart eine Übermittlung von Validierungsdaten zur Validierung der Positionsdaten des Senders, wobei die Validierungsdaten von weiteren Fahrzeugen bereitgestellt werden. Die US 10,621,868 B2 hingegen berücksichtigt den Doppler-Effekt zur Validierung der Gültigkeit der Nachrichten. Die DE 11 2009 001 007 B4 beschreibt eine Übermittlung einer Nachricht, welche sowohl die Senderposition des sendenden Fahrzeugs und GPS-Rohdaten des sendenden Fahrzeugs umfasst. Der Empfänger ermittelt die Senderposition des sendenden Fahrzeugs aus den erhaltenen GPS-Rohdaten und vergleicht sie mit der empfangenen Senderposition, um die Nachricht zu validieren. Angelehnt daran beschreibt die WO 2018/224101 A1 die Verwendung von Kartendaten zum Erkennen eines GNSS-Spoofings durch den Sender. Die EP 2 593 807 B1 beschreibt einen Vergleich zweier relativer Positionierungen zwischen Sender und Empfänger. Die erste relative Positionierung wird aus den jeweiligen absoluten Positionen bestimmt, die zweite relative Positionierungen mittels zweier Antennenglieder. Dabei werden unterschiedliche auftretende Leistungsdichten betrachtet. Die DE 10 2013 217 869 A1 berücksichtigt unter Verwendung zweier Antennen zudem eine Empfangsrichtung. In der EP 2 783 236 B1 wird eine Positionsbestimmung des Senders beschrieben, die DE 10 2013 207 587 B2 hingegen validiert das Signal durch Berücksichtigung des Empfangswinkels.

Weiterhin offenbart die US 2019/0068639 A1 ein Verfahren zum Bestimmen der Plausibilität von Nachrichten in einem intelligenten Transportsystem mit einem oder mehreren Nachrichtenempfängern (z.B. Fahrzeugen), wobei die Nachrichten über einen drahtlosen Kommunikationskanal empfangen werden. Eine Plausibilitätsbestimmung wird dabei durch einen Abgleich von Informationen aus verschiedenen Quellen erreicht, um die Integrität von Nachrichten zu verifizieren.

Es ist daher die Aufgabe der gegenständlichen Erfindung, ein verbessertes Verfahren zur Authentifizierung von V2X-Nachrichten anzugeben.

Diese Aufgabe wird erfindungsgemäß gelöst, indem lokale Umgebungsgeodaten, umfassend eine Positionierung einer Anzahl an stationären Objekte, zur Verfügung gestellt werden, wobei ausgehend von der behaupteten Senderposition und unter Berücksichtigung der Umgebungsgeodaten ein Signalpfad der V2X-Nachricht simuliert wird, wobei aus dem simulierten Signalpfad und der Position des Fahrzeugs zumindest eine simulierte physikalische Empfangssignaleigenschaft ermittelt wird. Die V2X-Nachricht wird validiert, sofern die zumindest eine simulierte physikalische Empfangssignaleigenschaft von der zumindest einen tatsächlichen physikalischen Empfangssignaleigenschaft um weniger als einen Grenzwert abweicht.

Weiters wird die Aufgabe durch eine Validierungsvorrichtung gelöst, wobei eine Geodateneinheit vorgesehen ist, welche ausgestaltet ist, lokale Umgebungsgeodaten, umfassend eine Positionierung einer Anzahl an stationären Objekten, zur Verfügung zu stellen. Weiters ist eine Simulationseinheit vorgesehen, welche mit der Extraktionseinheit und der Geodateneinheit verbunden und ausgestaltet ist, unter Verwendung der behaupteten Senderposition, den lokalen Umgebungsgeodaten und einer bekannten Empfängerposition des Fahrzeugs einen Signalpfad der V2X-Nachricht zu simulieren und aus dem simulierten Signalpfad und der bekannten Empfängerposition zumindest eine simulierte physikalische Empfangssignaleigenschaft zu ermitteln. Eine Validierungseinheit ist mit der Simulationseinheit und mit der Analyseeinheit verbunden und ausgestaltet, die V2X-Nachricht zu validieren, sofern die zumindest eine simulierte physikalische Empfangssignaleigenschaft von der zumindest einen tatsächlichen physikalischen Empfangssignaleigenschaft um weniger als ein Grenzwert abweicht. Natürlich können die Validierungsvorrichtung und deren untergeordnete Einheiten ausgestaltet sein, auch die weiteren in Folge beschriebenen Verfahrensschritte auszuführen. Als Validierung wird eine Kennzeichnung als vertrauenswürdig angesehen.

Es kann eine Ortungseinheit vorgesehen sein um die Empfängerposition des Fahrzeugs zu bestimmen. Die Ortungseinheit kann integraler Bestandteil der Validierungsvorrichtung sein, oder auch Bestandteil einer weiteren Vorrichtung des Fahrzeugs, z.B. ein bereits verbautes GNSS-System, sein.

Es wird erfindungsgemäß nicht lediglich eine potentielle physikalische Empfangssignaleigenschaft auf Basis der relativen Positionierung von Sender und Empfänger (d.h. Distanz und Ausrichtung) berechnet und mit einer tatsächlichen physikalischen Empfangssignaleigenschaft der empfangenen V2X-Nachricht verglichen, sondern unter Berücksichtigung lokaler Umgebungsgeodaten ein Signalpfad simuliert. Damit sind für den simulierten Signalpfad nicht lediglich die relative Positionierung von Sender und dem Empfänger ausschlaggebend, sondern auch lokale Geodaten, welche den Signalpfad beeinflussen. Durch die Simulation des Signalpfads unter Berücksichtigung lokaler Umgebungsgeodaten ist es für einen Angreifer erschwert die Senderposition zu fälschen, da eine gefälschte Senderposition zu einem falschen simulierten Signalpfad führt, was dazu führt, dass die simulierten physikalischen Empfangssignaleigenschaften nicht mit den tatsächlichen physikalischen Empfangssignaleigenschaften übereinstimmen.

Als Umgebungsgeodaten können geografische Karten (z.B. OpenstreetMap), in welchen stationäre Objekte wie Häuser, Pflanzen etc. verzeichnet sind, vorliegen. Nach Zuordnung der behaupteten Senderposition und der Empfängerposition in Relation zu den stationären Objekten in der Umgebung des Senders und des Empfängers kann der Signalpfad ausgehend vom Sender und unter Berücksichtigung der stationären Objekte simuliert werden. Durch die Berücksichtigung der lokalen Geodaten bei der Simulation des Signalpfads können die physikalischen Empfangssignaleigenschaften durch die Geodaten "geprägt" werden. Unter Prägung wird die Erfassung von Objekten entlang des Pfads zwischen dem Sender und Empfänger verstanden. Da sich bei bewegtem Sender und/oder Empfänger der Pfad verändert, fließen im Laufe der Kommunikation entsprechend unterschiedliche stationäre Objekte in die Kommunikation ein. Die Menge der Objekte, welche sich im Pfad befanden steigt somit. Die Prägung eines Empfangssignals und damit der physikalischen Empfangssignaleigenschaften durch ein Objekt kann sich z.B. in Form einer Signaldämpfung durch das Objekt und/oder Reflexion am Objekt äußern.

Bei der Simulation des Signalpfads kann eine Reflexion und/oder eine Beugung und/oder eine Absorption der V2X-Nachricht an den stationären Objekten berücksichtigt werden. Als Absorption kann vollständige Absorption und/oder Teilabsorption berücksichtigt werden. Weiters können zur Simulation des Signalpfads Methoden wie z.B. Raytracing verwendet werden.

Vorzugsweise wird der simulierte Signalpfad und/oder die simulierte physikalische Empfangssignaleigenschaft mittels physikalischer und/oder stochastischer Modelle und/oder anhand von Näherungsverfahren basierend auf Machine-Learning, vorzugsweise speziell trainierte neuronale Netze, simuliert. Damit kann die für die Simulation benötigte Rechenleistung gering gehalten werden. Es können beispielsweise auch stark optimierte Algorithmen wie das "geometry-based stochastic channel model" (M. Hofer et al., "Evaluation of Vehicle-in-the-Loop Tests for Wireless V2X Communication," 2019 IEEE 90th Vehicular Technology Conference (VTC2019-Fall), Honolulu, HI, USA, 2019, pp. 1-5) verwendet werden.

Vorzugsweise umfassen die lokalen Umgebungsgeodaten physikalische Objekteigenschaften der Objekte. Beispielsweise können direkt signalspezifische physikalische Objekteigenschaften wie Reflexionsindizes und/oder Signaldämpfung der Objekte in den lokalen Umgebungsgeodaten enthalten sein. Signalspezifische physikalische Objekteigenschaften können insbesondere jene physikalische Objekteigenschaften der Objekte umfassen, welche Kanaleigenschaften für die verwendeten Frequenzen (z.B. 1,8 bis 3,5 oder 5 GHz) beeinflussen. Es können auch lediglich physikalische Objekteigenschaften, wie z.B. der Objekttyp der Objekte (Baum, Busch, Gebäude, Erdhügel etc.) in den lokalen Umgebungsgeodaten enthalten sein. Die signalspezifischen physikalischen Objekteigenschaften können wiederum auf Basis der physikalischen Objekteigenschaften abgeleitet werden.

Vorzugsweise wird ein tatsächlicher Empfangswinkel als zumindest eine physikalische Empfangssignaleigenschaft ermittelt und ein simulierter Empfangswinkel als zumindest eine simulierte physikalische Empfangssignaleigenschaft ermittelt. Ohne Berücksichtigung der lokalen Geodaten bei der Simulation des Signalpfads wird bei einer Reflexion an Objekten ein Signalempfangswinkel nicht korrekt simuliert, da durch Reflexionen der Signalpfad und damit auch der Signalempfangswinkel beeinflusst wird. Zur Ermittlung des tatsächlichen Empfangswinkels kann eine richtungsempfindliche Antenne (DOA - direction of arrival) verwendet werden, beispielsweise eine ESPAR-Antenne (electronically steerable parasitic array radiator).

Vorzugsweise wird eine tatsächliche Empfangssignalstärke als zumindest eine physikalische Empfangssignaleigenschaft ermittelt und eine simulierte Empfangssignalstärke als zumindest eine simulierte physikalische Empfangssignaleigenschaft ermittelt. Würden die lokalen Geodaten nicht berücksichtigt, so könnte nicht unterschieden werden, ob eine geringe Signalstärke aufgrund einer hohen Entfernung zum Fahrzeug, oder aufgrund in der Umgebung von Sender und/oder Empfänger positionierten Objekten auftritt

Weiters können Polarisation und/oder Doppler-Verschiebung und/oder Frequenz-Dispersion und/oder Signallaufzeiten als physikalische Empfangssignaleigenschaft (und entsprechend als simulierte physikalische Empfangssignaleigenschaft) vorgesehen sein.

Die behauptete Senderposition kann direkt in der V2X-Nachricht enthalten sein. Damit muss die behauptete Senderposition lediglich aus der V2X-Nachricht ausgelesen werden. Die behauptete Senderposition kann aber auch aus anderer in der V2X-Nachricht enthaltenen Information abgeleitet werden, womit die behauptete Senderposition implizit als "behauptet" gilt. Als "behauptet" gilt grundlegend die vom Sender gemeldete Senderposition, welche mit der tatsächlichen Senderposition übereinstimmen kann oder von der tatsächlichen Senderposition abweichen kann. Natürlich ist es auch möglich die behauptete Senderposition aus der V2X-Nachricht auszulesen (da sie direkt in der V2X-Nachricht enthalten ist) und zusätzlich, z.B. zur Überprüfung der behaupteten Senderposition, aus der V2X-Nachricht abzuleiten, um eine Redundanz zu erzeugen. Die Ableitung der behaupteten Senderposition kann beispielsweise aus einer mit der V2X-Nachricht übermittelten Perzeption des Senders erfolgen. Die Ableitung der behaupteten Senderposition kann auch aus einer Sender-ID erfolgen, insbesondere wenn der Sender ortsfest ist, z.B. eine Infrastruktureinrichtung (Ampelanlage etc.) darstellt.

Vorzugsweise wird die V2X-Nachricht als ungültig erklärt, wenn die zumindest eine simulierte physikalische Empfangssignaleigenschaft von der zumindest einen tatsächlichen physikalischen Empfangssignaleigenschaft um zumindest den Grenzwert abweicht. Somit wird die V2X-Nachricht invalidiert, wenn sie nicht validiert wurde.

Es kann bei einer Ungültigerklärung der V2X-Nachricht der Sender als unzuverlässig markiert werden. Dies kann erfolgen, indem eine Senderidentifikation und/oder ein Senderzertifikat des Senders als unzuverlässig markiert wird. Weiters kann eine Meldung bezüglich der Unzuverlässigkeit des Senders erfolgen, welche beispielsweise als Broadcast an die Fahrzeuge in der Umgebung und/oder eine zentrale Stelle (z.B. eine Verkehrsleitzentrale) gesendet wird.

Vorteilhafterweise wird die Validierung mehrfach durchgeführt. Da Sender und/oder Empfänger in Bewegung sind und somit mit der Zeit eine steigende Fläche überstreichen und somit der Sendepfad durch eine zunehmende Anzahl an stationären Objekten beeinflusst wird, steigt die oben beschriebene "Prägung" der physikalischen Empfangssignaleigenschaft und somit die Aussagekraft der Validierung.

Vorzugsweise wird eine behauptete Sendergeschwindigkeit und/oder eine behauptete Senderbeschleunigung aus der V2X-Nachricht ermittelt, aus der behaupteten Senderposition des Senders eine errechnete Sendergeschwindigkeit und/oder eine errechnete Senderbeschleunigung ermittelt und die V2X-Nachricht zusätzlich validiert, wenn die behauptete Sendergeschwindigkeit und/oder behauptete Senderbeschleunigung, vorzugsweise um weniger als einen weiteren Grenzwert, von der errechneten Sendergeschwindigkeit und/oder Senderbeschleunigung, abweicht.

Es kann unter Verwendung der lokalen Umgebungsgeodaten und der tatsächlichen physikalischen Empfangssignaleigenschaft der V2X-Nachricht die tatsächliche Senderposition des Senders bestimmt werden und mit der behaupteten Senderposition des Senders verglichen werden. Damit schätzt der Empfänger die tatsächliche Senderposition, z.B. indem der tatsächliche Signalpfad auf Basis der Empfangsrichtung und der Empfangsfeldstärke der V2X-Nachricht sowie den lokalen Umgebungsgeodaten simuliert wird. In Folge kann die tatsächliche Senderposition mit der behaupteten Senderposition verglichen werden, um eine zusätzliche Validierung zu ermöglichen, falls tatsächliche Senderposition und behauptete Senderposition um weniger als einen entsprechenden Positionsabweichungsgrenzwert abweichen.

Weiters kann eine tatsächliche Sendergeschwindigkeit des Senders aus der tatsächlichen Senderposition ermittelt und mit einer in der V2X-Nachricht enthaltenen behaupteten Geschwindigkeit des Senders verglichen werden. Damit kann eine weitere Validierung erfolgen, falls tatsächliche (geschätzte) Sendergeschwindigkeit und behauptete Sendergeschwindigkeit um weniger als einen entsprechenden Geschwindigkeitsabweichungsgrenzwert abweichen.

Vorzugsweise wird Sensorik des Fahrzeugs verwendet, um zumindest einen Teil der in der der V2X-Nachricht enthaltenen Information, vorzugsweise zumindest den Sendertyp des Senders, zu verifizieren. Der Sendertyp des Senders kann beispielsweise zwischen PKW, LKW, Ampel etc. unterschieden werden. Als Sendertyp kann beispielsweise die Norm ISO-TS18234-4, TPEG-RTM herangezogen werden, in welcher beispielsweise "Car", "Taxi", "Bus" oder Tram als "*vehicle_type"* definiert werden. So kann der Sender in der V2X-Nachricht beispielsweise einen Sendertyp als Information übermitteln. Es kann z.B. am Empfänger eine Kamera (als Sensorik) vorgesehen sein, um den Sendertyp zu identifizieren. Stimmt der durch die Sensorik identifizierte Sendertyp mit dem in der V2X-Nachricht übermittelten Sendertyp überein, so ist dieser Sendertyp verifiziert. Beispielsweise kann auch eine in der V2X-Nachricht übermittelte Geschwindigkeit des Senders als Information übermittelt werden, wobei die Geschwindigkeit des Senders anhand der Sensorik (z.B. Front-Radar mit Dopplermessung) im Empfänger verifiziert wird.

Bei erfolgter Verifizierung der in der V2X-Nachricht enthaltenen Information kann die V2X-Nachricht validiert, d.h. als vertrauenswürdig gekennzeichnet, werden. Diese Validierungsmethode kann nicht nur zusätzlich zur oder auch statt der zuvor beschriebenen Validierungsmethode (Simulation des Signalpfads unter Verwendung der Umgebungsgeodaten zur Ermittlung der simulierten physikalischen Empfangssignaleigenschaft und Abgleich dieser mit einer tatsächlichen physikalischen Empfangssignaleigenschaft) erfolgen.

Vorzugsweise ist die V2X-Nachricht eine V2V-Nachricht, vorzugsweise eine Common-Awareness-Message.

In einer V2X-Nachricht enthaltene Information kann bekanntermaßen im Fahrzeug verwendet werden, um teil- oder vollautomatisiertes Fahren durchzuführen. Wurde die V2X-Nachricht validiert, so wird die enthaltene Information als vertrauenswürdig gekennzeichnet und kann für die Funktion des teil- oder vollautomatisierten Fahrens verwendet werden. Wird die V2X-Nachricht jedoch als invalide erklärt, so wird die in der V2X-Nachricht verwendete Information für ungültig erklärt und nicht für die Funktion des automatisierten Fahrens verwendet (d.h. außenvor gelassen). Ist weitere vorhandene Information (z.B. von vorhandener Sensorik ermittelte Information) nicht ausreichend, um die Funktion des automatisierten Fahrens sicher auszuführen, so kann diese Funktion in weiterer Folge deaktiviert werden. Damit kann dem Fahrer die volle Kontrolle über das Fahrzeug übergeben oder ein sicherer Halt des Fahrzeugs initiiert werden. Es kann auch der Fall eintreten, dass die weitere vorhandene Information zwar nicht für die vollständige Funktion des automatisierten Fahrens ausreichend ist, jedoch eine eingeschränkte Funktion erlaubt, z.B. eine verminderte Geschwindigkeit.

Weiters kann die in der V2X-Nachricht enthaltene Information (z.B. Vorhandensein einer Baustelle) im Fahrzeug angezeigt werden und weiters ein Vermerk bezüglich der Validierung der V2X-Nachricht, d.h. bezüglich der Vertrauenswürdigkeit der Information, angezeigt werden. So wird dem Fahrer einerseits die Information mitgeteilt und andererseits ob diese Information als vertrauenswürdig eingestuft wurde

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 einen beispielhaften schematischen Aufbau einer Validierungsvorrichtung
Fig.2 einen direkten simulierten Signalpfad einer V2X-Nachricht,
Fig.3 einen an einem Objekt reflektierten simulierten Signalpfad einer V2X-Nachricht,
Fig.4 einen an zwei Objekten reflektierten simulierten Signalpfad einer V2X-Nachricht.

Eine V2X-Nachricht 3 wird von einem Sender 2 an einen Empfänger 1 übermittelt, wobei als Empfänger 1 ein Fahrzeug vorgesehen ist. Als Sender 2 kann ein Fahrzeug (V2V-Nachricht), aber auch Infrastruktur, ein externes IT-System, ein externer IT-Service (V2I-Nachricht), ein anderer Verkehrsteilnehmer (V2P-Nachricht), ein Cloud-Service (V2C-Nachricht) etc. vorgesehen sein.

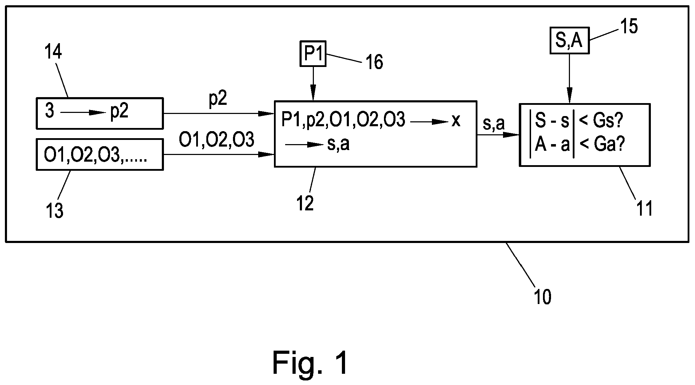

Es ist zur Validierung einer V2X-Nachricht 3 am Empfänger 1 eine Validierungsvorrichtung 10 vorgesehen, wie sie in Fig 1 schematisch dargestellt ist. Die V2X-Nachicht 3 beinhaltet direkt eine behauptete Senderposition p2 des Senders 2 oder enthält Information, aus denen die behauptete Senderposition p2 ableitbar ist. Für die Kommunikation mit einem Cloud-Service (V2C-Nachricht) kann die behauptete Position des aktiven Funkmasts (z.B. ein Mobilfunk Sendemast bei C-ITS), als behauptete Senderposition p2 angesehen werden.

Enthält die V2X-Nachicht 3 Information, aus denen die behauptete Senderposition p2 ableitbar ist, so kann eine Extraktionseinheit 14 vorgesehen sein, welche ausgestaltet ist, die behauptete Senderposition p2 aus der V2X-Nachricht 3 zu ermitteln. Die behauptete Senderposition p2 kann korrekt oder inkorrekt sein (d.h. mit der tatsächlichen Senderposition übereinstimmen), wobei eine inkorrekte behauptete Senderposition p2 schlicht gefälscht oder auch unbeabsichtigt inkorrekt sein kann.

Es ist eine Ortungseinheit 16 vorgesehen, welche ausgestaltet ist, die Empfängerposition P1 des Fahrzeugs 1 zu bestimmen. Die Ortungseinheit 16 kann integraler Bestandteil der Validierungsvorrichtung 10 sein, oder auch Bestandteil eines anderen Systems des Fahrzeugs 1 sein, welche die Empfängerposition P1 der Validierungsvorrichtung 10 zur Verfügung stellt. Es wird davon ausgegangen, dass die bekannte Empfängerposition P1 des Fahrzeugs korrekt ist.

Weiters ist eine Analyseeinheit 15 vorgesehen, die ausgestaltet ist, beim Empfang der V2X-Nachricht 3 zumindest eine tatsächliche physikalische Empfangssignaleigenschaft der V2X-Nachricht 3, z.B. eine tatsächliche Empfangssignalstärke S und/oder einen tatsächlichen Empfangssignalwinkel A, zu ermitteln.

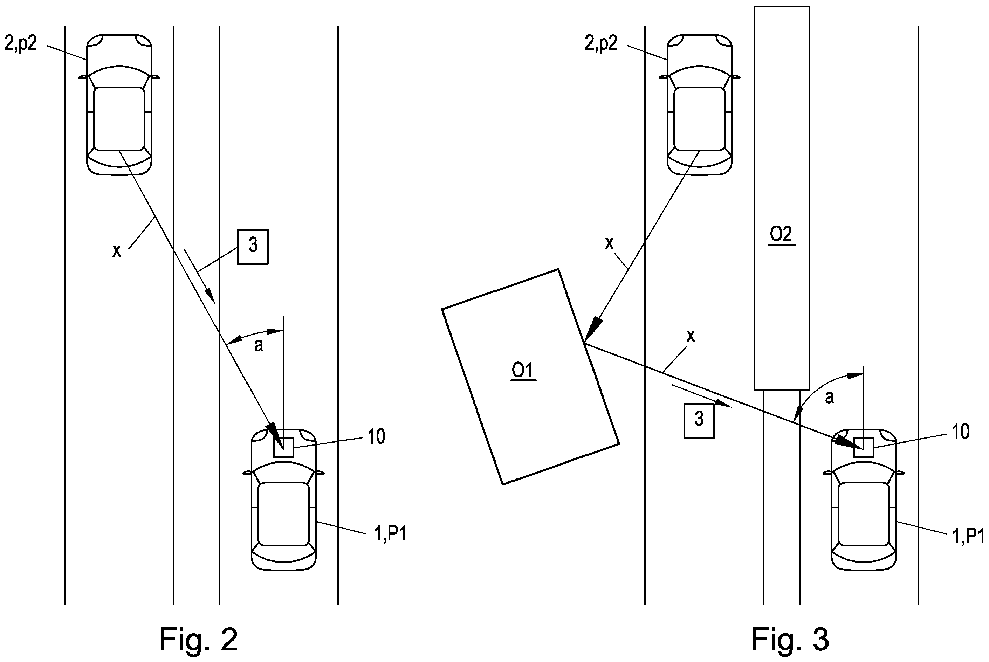

Erfindungsgemäß ist eine Geodateneinheit 13 vorgesehen, welche ausgestaltet ist, lokale Umgebungsgeodaten zur Verfügung zu stellen. Die Umgebungsgeodaten umfassen Positionen von stationären Objekten O1, O2, O3, O4 beispielsweise in Form von 2D-Karten, oder 3D-Karten. Als Geodateneinheit 13 kann ein lokaler Speicher mit Positionen der stationären Objekte O1, O2, O3, O4 und/oder eine Empfangseinheit zum Empfang der Position der stationären Objekte O1, O2, O3, O4 vorgesehen sein. Eine beispielhafte Positionierung von stationären Objekten O1, O2, O3, O4 ist in den Fig. 2 bis 4 dargestellt und wird weiter unten beschrieben.

Zudem ist erfindungsgemäß eine Simulationseinheit 12 vorgesehen, welche von der Extraktionseinheit 14 die behauptete Senderposition p2 des Senders 2 zur Verfügung gestellt bekommt. Weiters bekommt die Simulationseinheit 12 von der Geodateneinheit 13 die Umgebungsgeodaten 01, 02, O3, O4 zur Verfügung gestellt. Die Simulationseinheit 12 simuliert den Signalpfad x der V2X-Nachricht 3 von der behaupteten Senderposition p2 zur Empfängerposition P1 unter Berücksichtigung der stationären Objekte O1, O2, O3, O4. Es wird weiters aus dem simulierten Signalpfad x und der Empfängerposition P1 zumindest eine simulierte physikalische Empfangssignaleigenschaft, z.B. eine simulierte Empfangssignalstärke s und/oder ein simulierter Empfangssignalwinkel a, bestimmt. Die simulierte Empfangssignalstärke s ist abhängig von der Länge des simulierten Signalpfads x und den Objekttypen und/oder Objekteigenschaften der entlang des Signalpfads x positionierten Objekten O1, O2, O3, O4. Beispielsweise haben Bäume eine signaldämpfende Wirkung. Der simulierte Empfangssignalwinkel a ergibt sich aus der Orientierung des am Empfänger 1 auftreffenden simulierten Signalpfads x.

Um zu verifizieren, dass der simulierte Signalpfad x dem tatsächlichen Signalpfad entspricht, ist eine Validierungseinheit 11 vorgesehen, welche die zumindest eine simulierte physikalische Empfangssignaleigenschaft von einer Simulationseinheit 12 und die zumindest eine tatsächliche Signaleigenschaft von der Analyseeinheit 15 erhält. Die zumindest eine simulierte physikalische Empfangssignaleigenschaft wird mit der zumindest einen tatsächlichen Signaleigenschaft verglichen. Weicht die zumindest eine simulierte physikalische Empfangssignaleigenschaft von der zumindest einen tatsächlichen physikalischen Empfangssignaleigenschaft um weniger als ein Grenzwert G ab, so wird die V2X-Nachricht 3 validiert. Es wird somit von einer korrekten physikalischen Empfangssignaleigenschaft (d.h. eine Abweichung um weniger als dem Grenzwert G von der tatsächlichen Signaleigenschaft) darauf geschlossen, dass der simulierte Signalpfad x korrekt ist, womit wiederum darauf rückgeschlossen wird, dass die Senderposition p2 korrekt ist. Es kann analog von einer inkorrekten physikalischen Empfangssignaleigenschaft (d.h. einer Abweichung um zumindest den Grenzwert G von der tatsächlichen Signaleigenschaft) darauf geschlossen, dass der simulierte Signalpfad x inkorrekt ist, womit wiederum darauf rückgeschlossen wird, dass die Senderposition p2 inkorrekt ist.

Es kann eine simulierte physikalische Empfangssignaleigenschaft mit einer tatsächlichen physikalischen Empfangssignaleigenschaft verglichen werden oder eine Mehrzahl an simulierten physikalischen Empfangssignaleigenschaften mit einer Mehrzahl an tatsächlichen physikalischen Empfangssignaleigenschaften verglichen werden, wobei jeweils Grenzwerte vorgesehen sein können. In Fig. 1 ist beispielhaft einerseits ein Vergleich der simulierten Empfangssignalstärke s mit der tatsächlichen Empfangssignalstärke S und andererseits ein Vergleich des simulierten Empfangswinkels a mit dem tatsächlichen Empfangswinkel A vorgesehen. Vorzugsweise strahlt der Sender 2 die V2X-Nachricht 3 omnidirectional, d.h. in der zweidimensionalen Darstellung in alle Richtungen der Ebene parallel zu einer Fahrbahnebene gleichmäßig, aus. Es wird die Differenz aus der simulierten Empfangssignalstärke s und der tatsächlichen Empfangssignalstärke S berechnet und der Betrag der Differenz mit einem Signalstärkengrenzwert Gs verglichen: |S - sl<Gs. Weiters wird die Differenz aus dem simulierten Empfangswinkel a und dem tatsächlichen Empfangswinkel A berechnet und der Betrag der Differenz mit einem Winkelgrenzwert Ga verglichen: |A - a|<Ga. Bei einer Validierung des Empfangswinkels A wird natürlich berücksichtigt, dass 0° 360° entspricht. Somit wird beispielsweise bei einem Empfangswinkel A von 359° und einem simulierten Empfangswinkel a von 1° eine Differenz von 2° und nicht von 358° bestimmt. Durch die Betragsbildung der Differenz ist für eine positive Abweichung und eine negative Abweichung derselbe Grenzwert vorgesehen, es kann natürlich auch für eine positive Abweichung ein Vergleich mit einem oberen Grenzwert und für eine negative Abweichung ein Vergleich mit einem unteren Grenzwert durchgeführt werden.

Es ist in den Fig. 2, 3 und 4 jeweils eine behauptete Senderposition p2 des Senders 2 und der simulierte Signalpfad x dargestellt. Würde sich der Sender 2 tatsächlich an der Senderposition p2 befinden, so würde der tatsächliche Signalpfad auch dem simulierten Signalpfad x entsprechen. Der Sender 2 wird in den Figuren nur beispielhaft als Fahrzeug repräsentiert, womit die V2X-Nachricht 3 eine V2V-Nachricht darstellt.

In Fig. 2 ist angenommen, dass sich kein Objekt O1, O2, O3, O4 zwischen dem Sender 2 und dem Empfänger 1 befindet, womit die V2X-Nachricht 3 entlang eines direkten simulierten Signalpfads x vom Sender 2 an den Empfänger 1 übertragen wird. Damit ergibt sich für die empfangene V2X-Nachricht 3 ein simulierter Empfangswinkel a und eine simulierte Empfangssignalstärke s (nicht eingezeichnet). Die Darstellung in Fig. 2 ist natürlich nur theoretischer Natur, da eine vollständige Abwesenheit von Objekten O1, O2, O3, O4 höchst unwahrscheinlich ist.

Fig. 3 zeigt die gleiche relative Positionierung des Senders 2 und Empfängers 1, wie Fig. 2.

Es tritt hier jedoch ein anderer simulierter Signalpfad x auf, was auf die Position des zweiten Objekts O2 zwischen dem Sender 2 und dem Fahrzeug 1 zurückzuführen ist, welcher einen direkten simulierten Signalpfad x, wie er in Fig. 2 dargestellt ist, verhindert. Es ist jedoch ein erstes Objekt O1 vorhanden, an welchem die V2X-Nachricht 3 reflektiert wird. Der simulierte Signalpfad x führt also vom Sender 2 zum ersten Objekt O1, an welchem die V2X-Nachricht 3 reflektiert wird, und weiters zum Empfänger 1. Damit ergibt sich in Fig. 2 ein anderer (hier stumpferer) simulierter Empfangswinkel a der V2X-Nachricht gegenüber Fig. 2. Ebenso tritt in Fig. 3 gegenüber Fig. 2, eine andere (hier verringerte) simulierte Empfangssignalstärke s auf (nicht eingezeichnet), was auf den längeren simulierten Signalpfad x zurückzuführen ist.

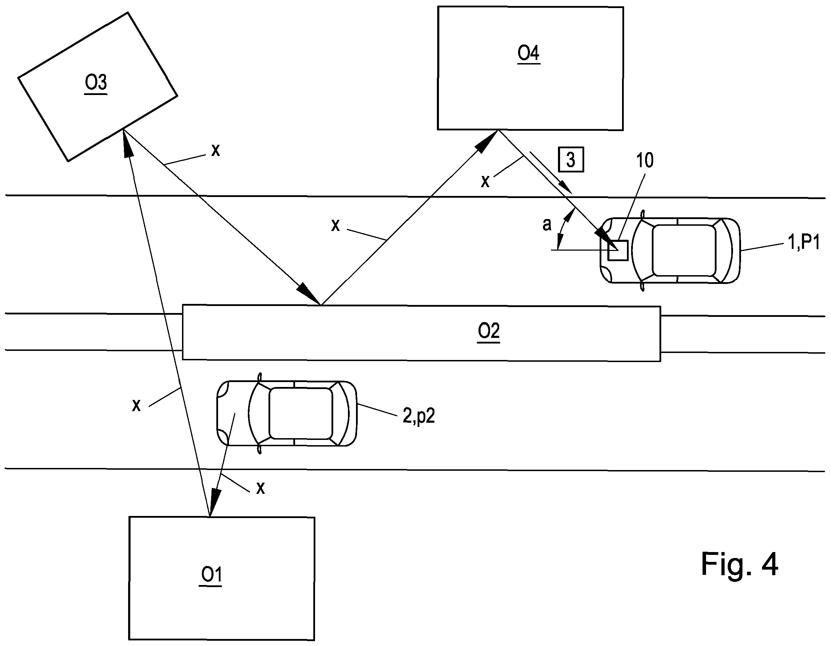

Fig. 4 zeigt ebenso die gleiche relative Anordnung des Senders 2 und Empfängers 1, wobei wiederum ein anderer simulierter Signalpfad x auftritt, da die V2X-Nachricht 3 mehrfach reflektiert wird. So führt der simulierte Signalpfad x der V2X-Nachricht 3 vom Sender 2 über eine Reflexion am ersten Objekt 1 zu einer Reflexion am dritten Objekt O3 und über weitere Reflexionen am zweiten Objekt O2 und vierten Objekt O4 zum Empfänger 1. Somit ergibt sich in Fig. 4 gegenüber Fig. 2 und 3 ein gänzlich anderer simulierter Empfangswinkel a der V2X-Nachricht 3. Zudem tritt aufgrund des wiederum längeren simulierten Signalpfads x gegenüber den Fig. 2 und 3 eine weiter verringerte simulierte Empfangssignalstärke S auf (nicht eingezeichnet).

Es ist somit ersichtlich, dass die physikalischen Empfangssignaleigenschaften stark von den lokalen Objekten O1, O2, O3, O4 in der Umgebung des Senders 2 und des Empfängers 1 abhängen. Es kann somit anhand der behaupteten Senderposition p2 und den lokalen Geodaten sowie der bekannten Empfängerposition P1 ein Signalpfad x simuliert werden, woraus wiederum physikalische Empfangssignaleigenschaften simuliert werden können. Die tatsächlichen Signaleigenschaften werden ermittelt und mit den simulierten physikalischen Empfangssignaleigenschaften verglichen, um zu ermitteln ob der simulierte Signalpfad x mit dem tatsächlichen Signalpfad übereinstimmt. Ist dem der Fall, so kann davon ausgegangen werden, dass die behauptete Senderposition p2 der tatsächlichen Senderposition entspricht, womit die V2X-Nachricht 3 validiert werden kann.

Der Signalpfad x ist in den Figuren zur besseren Darstellung stark vereinfach dargestellt, wobei neben einfachen Abschirmungseffekten lediglich eine einfache Reflexion unter der Voraussetzung eines Ausfallswinkels entsprechend des Einfallswinkels berücksichtigt wird. Es können bei der Simulation des Signalpfads x neben den Effekten der Reflexion und Abschirmung weitere Effekte berücksichtigt werden, beispielsweise auch Beugung etc. Es können bei der Simulation weiters auch mehrere Signalpfade x berücksichtigt werden, wobei wiederum Effekte wie (unterschiedliche) Signallaufzeiten etc. berücksichtigt werden können.

Die Extraktionseinheit 14, Analyseeinheit 15, Geodateneinheit 13, Simulationseinheit 12, Validierungseinheit 11 und Ortungseinheit 16 können als mikroprozessorbasierte Hardware ausgeführt sein, beispielsweise als ein Computer oder Digitaler Signalprozessor (DSP) auf welcher entsprechende Software zur Durchführung der jeweiligen Funktion ausgeführt wird. Die Extraktionseinheit 14, Analyseeinheit 15, Geodateneinheit 13, Simulationseinheit 12, Validierungseinheit 11 und Ortungseinheit 16 können auch jeweils eine integrierte Schaltung sein, beispielsweise eine anwendungsspezifische integrierte Schaltung (ASIC) oder ein Field Programmable Gate Array (FPGA), auch mit einem Mikroprozessor. Die Extraktionseinheit 14, Analyseeinheit 15, Geodateneinheit 13, Simulationseinheit 12, Validierungseinheit 11 und Ortungseinheit 16 können aber auch als analoger Schaltkreis oder analoger Computer implementiert sein. Auch Mischformen sind denkbar. Ebenso ist es möglich, dass verschiedene Funktionen als Software auf derselben Hardware ausgeführt sind.

## Patentansprüche

1. Verfahren zur Validierung einer durch einen Sender (2) gesendeten und durch einen Empfänger (1) empfangenen V2X-Nachricht (3), wobei der Empfänger (1) an einem Fahrzeug angeordnet ist und beim Empfang der V2X-Nachricht (3) zumindest eine tatsächliche physikalische Empfangssignaleigenschaft der V2X-Nachricht (3) ermittelt wird und wobei aus der V2X-Nachricht (3) eine behauptete Senderposition (p2) des Senders (2) ermittelt wird, wobei lokale Umgebungsgeodaten, umfassend eine Positionierung einer Anzahl stationärer Objekte (O1, O2, O3, O4), zur Verfügung gestellt werden, wobei ausgehend von der behaupteten Senderposition (p2) unter Berücksichtigung der Umgebungsgeodaten und der Empfängerposition (P1) ein Signalpfad (x) der V2X-Nachricht (3) simuliert wird, wobei aus dem simulierten Signalpfad (x) und der Empfängerposition (P1) zumindest eine simulierte physikalische Empfangssignaleigenschaft ermittelt wird, und wobei die V2X-Nachricht (3) validiert wird, sofern die zumindest eine simulierte physikalische Empfangssignaleigenschaft von der zumindest einen tatsächlichen physikalischen Empfangssignaleigenschaft um weniger als einen Grenzwert (G) abweicht.

2. Verfahren nach Anspruch 1, wobei bei der Simulation des Signalpfads (x) eine Reflexion und/oder eine Beugung und/oder eine Absorption der V2X-Nachricht (3) an den stationären Objekten (O1, O2, O3, O4) berücksichtigt wird.

3. Verfahren nach Anspruch 2, wobei die lokalen Umgebungsgeodaten physikalische Objekteigenschaften, vorzugsweise Reflexionseigenschaften und/oder Dämpfungseigenschaften, der stationären Objekte (O1, O2, O3, O4) umfassen.

4. Verfahren nach einem der Ansprüche 1 bis 3, wobei ein tatsächlicher Empfangswinkel (A) als zumindest eine physikalische Empfangssignaleigenschaft ermittelt wird und wobei ein simulierter Empfangswinkel (a) als zumindest eine simulierte physikalische Empfangssignaleigenschaft ermittelt wird.

5. Verfahren nach einem der Ansprüche 1 bis 4, wobei eine tatsächliche Empfangssignalstärke (S) als zumindest eine physikalische Empfangssignaleigenschaft ermittelt wird **und** wobei eine simulierte Empfangssignalstärke (s) als zumindest eine simulierte physikalische Empfangssignaleigenschaft ermittelt wird.

6. Verfahren nach einem der Ansprüche 1 bis 5, wobei die behauptete Senderposition (p2) direkt in der V2X-Nachricht (3) enthalten ist.

7. Verfahren nach einem der Ansprüche 1 bis 6, wobei die behauptete Senderposition (p2) aus in der V2X-Nachricht (3) enthaltenen Information abgeleitet wird.

8. Verfahren nach einem der Ansprüche 1 bis 7, wobei die V2X-Nachricht (3) als ungültig erklärt wird, wenn die zumindest eine simulierte physikalische Empfangssignaleigenschaft von der zumindest einen tatsächlichen physikalischen Empfangssignaleigenschaft um zumindest den Grenzwert (G) abweicht.

9. Verfahren nach Anspruch 8, wobei bei einer Ungültigerklärung der V2X-Nachricht (3) der Sender (2) als unzuverlässig markiert wird.

10. Verfahren nach einem der Ansprüche 1 bis 9, wobei die Validierung mehrfach durchgeführt wird.

11. Verfahren nach einem der Ansprüche 1 bis 10, wobei eine Sendergeschwindigkeit und/oder eine Senderbeschleunigung aus der V2X-Nachricht ermittelt wird, wobei aus der behaupteten Senderposition (p2) des Senders (2) eine errechnete Sendergeschwindigkeit und/oder eine errechnete Senderbeschleunigung ermittelt wird und wobei die V2X-Nachricht (3) zusätzlich validiert wird, wenn die Sendergeschwindigkeit und/oder Senderbeschleunigung, vorzugsweise um weniger als einen weiteren Grenzwert, von der errechneten Sendergeschwindigkeit und/oder Senderbeschleunigung, abweicht.

12. Verfahren nach einem der Ansprüche 1 bis 11, wobei unter Verwendung der lokalen Umgebungsgeodaten und tatsächlichen physikalischen Empfangssignaleigenschaften der V2X-Nachricht (2) die tatsächliche Senderposition des Senders (2) bestimmt wird und mit der behaupteten Senderposition des Senders (2) verglichen wird.

13. Verfahren nach Anspruch 12, wobei eine tatsächliche Sendergeschwindigkeit des Senders (2) aus der tatsächlichen Senderposition ermittelt wird und mit einer in der V2X-Nachricht (2) enthaltenen behaupteten Geschwindigkeit des Senders (2) verglichen wird.

14. Verfahren nach einem der Ansprüche 1 bis 13, wobei Sensorik des Fahrzeugs (1) verwendet wird, um zumindest einen Teil der in der V2X-Nachricht (3) enthaltenen Information, vorzugsweise zumindest den Sendertyp des Senders (2), zu verifizieren.

15. Verfahren nach einem der Ansprüche 1 bis 14, wobei eine die V2X-Nachricht (3) eine V2V-Nachricht, vorzugsweise eine Common-Awareness-Message, ist.

16. Verfahren nach einem der Ansprüche 1 bis 15, wobei der simulierte Signalpfad (x) und/oder die simulierte physikalische Empfangssignaleigenschaft mittels physikalischer und/oder stochastischer Modelle und/oder anhand von Näherungsverfahren basierend auf Machine-Learning, vorzugsweise speziell trainierte neuronale Netze, simuliert wird.

17. Validierungsvorrichtung (10) zur Validierung einer durch einen Sender (2) gesendeten und durch einen, an einem Fahrzeug angeordneten, Empfänger (1) empfangenen V2X-Nachricht (3), umfassend eine Extraktionseinheit (14), welche ausgestaltet ist, eine behauptete Senderposition (p2) des Senders (2) aus der V2X-Nachricht (3) zu ermitteln, wobei eine Analyseeinheit (15) vorgesehen ist, die ausgestaltet ist, beim Empfang der V2X-Nachricht (2) zumindest eine tatsächliche physikalische Empfangssignaleigenschaft (S, A) zu ermitteln, wobei eine Geodateneinheit (13) vorgesehen ist, welche ausgestaltet ist, lokale Umgebungsgeodaten, umfassend eine Positionierung einer Anzahl an stationären Objekten (O1, O2, O3, O4), zur Verfügung zu stellen, wobei eine Simulationseinheit (12) vorgesehen ist, welche mit der Extraktionseinheit (14) und der Geodateneinheit (13) verbunden und ausgestaltet ist, unter Verwendung der behaupteten Senderposition (p2), den lokalen Umgebungsgeodaten und einer bekannten Empfängerposition (P1) des Fahrzeugs (1) einen Signalpfad (x) der V2X-Nachricht (3) zu simulieren und aus dem simulierten Signalpfad (x) und der bekannten Empfängerposition (P1) zumindest eine simulierte physikalische Empfangssignaleigenschaft zu ermitteln, und wobei eine Validierungseinheit (11) vorgesehen ist, welche mit der Simulationseinheit (12) und mit der Analyseeinheit (15) verbunden und ausgestaltet ist, die V2X-Nachricht (3) zu validieren, sofern die zumindest eine simulierte physikalische Empfangssignaleigenschaft von der zumindest einen tatsächlichen physikalischen Empfangssignaleigenschaft um weniger als ein Grenzwert (G) abweicht.

18. Validierungsvorrichtung (10) nach Anspruch 17, wobei eine Ortungseinheit (16) vorgesehen ist, welche ausgestaltet ist, die Empfängerposition (P1) des Empfängers (1) zu bestimmen.

## Claims

1. A method for validating a V2X message (3) sent by a transmitter (2) and received by a receiver (1), wherein the receiver (1) is arranged on a vehicle and at least one actual physical received signal property of the V2X message (3) is determined when the V2X message (3) is received, and wherein from the V2X message (3) a purported transmitter position (p2) of the transmitter (2) is determined, **wherein** local environmental geodata comprising a positioning of a number of stationary objects (O1, O2, O3, O4) is provided, **wherein** a signal path (x) of the V2X message (3) is simulated based on the purported transmitter position (p2) and taking into account the environmental geodata and the receiver position (P1), wherein at least one simulated physical received signal property is determined from the simulated signal path (x) and the receiver position (P1), **and wherein** the V2X message (3) is validated, if the at least one simulated physical received signal property differs from the at least one actual physical received signal property by less than a limit value (G).

2. The method according to Claim 1, **wherein** a reflection and/or a diffraction and/or an absorption of the V2X message (3) at the stationary objects (O1, O2, O3, O4) is taken into account in the simulation of the signal path (x).

3. The method according to Claim 2, **wherein** the local environmental geodata comprise physical object properties, preferably reflection properties and/or attenuation properties, of the stationary objects (O1, O2, O3, O4).

4. The method according to any one of Claims 1 to 3, **wherein** an actual reception angle (A) is determined as at least one physical received signal property **and wherein** a simulated reception angle (a) is determined as at least one simulated physical received signal property.

5. The method according to any one of Claims 1 to 4, **wherein** an actual received signal strength (S) is determined as at least one physical received signal property **and wherein** a simulated received signal strength (s) is determined as at least one simulated physical received signal property.

6. The method according to any one of Claims 1 to 5, **wherein** the purported transmitter position (p2) is directly included in the V2X message (3).

7. The method according to any one of Claims 1 to 6, **wherein** the purported transmitter position (p2) is derived from information contained in the V2X message (3).

8. The method according to any one of Claims 1 to 7, **wherein** the V2X message (3) is declared invalid, if the at least one simulated physical received signal property differs from the at least one actual physical received signal property by at least the limit value (G).

9. The method according to Claim 8, **wherein** the transmitter (2) will be labeled as unreliable, if the V2X message (3) is declared invalid.

10. The method according to any one of Claims 1 to 9, **wherein** the validation is carried out several times.

11. The method according to any one of Claims 1 to 10, **wherein** a transmitter speed and/or a transmitter acceleration is determined from the V2X message, **wherein** a calculated transmitter speed and/or a calculated transmitter acceleration is determined from the purported transmitter position (p2) of the transmitter (2), **and wherein** the V2X message (3) is additionally validated, if the transmitter speed and/or transmitter acceleration differ from the calculated transmitter speed and/or transmitter acceleration preferably by less than a further limit value.

12. The method according to any one of Claims 1 to 11, **wherein** the actual transmitter position of the transmitter (2) is determined using the local environmental geodata and actual physical received signal properties of the V2X message (2) and compared with the purported transmitter position of the transmitter (2).

13. The method according to Claim 12, **wherein** an actual transmitter speed of the transmitter (2) is determined from the actual transmitter position and compared with a purported speed of the transmitter (2) contained in the V2X message (2).

14. The method according to any one of Claims 1 to 13, **wherein** the sensor system of the vehicle (1) is used to verify at least a portion of the information contained in the V2X message (3), preferably at least the transmitter type of the transmitter (2).

15. The method according to any one of Claims 1 to 14, **wherein** the V2X message (3) is a V2V message, preferably a common awareness message.

16. The method according to any one of Claims 1 to 15, **wherein** the simulated signal path (x) and/or the simulated physical received signal property is simulated by using physical and/or stochastic models and/or by using approximation methods based on machine learning, preferably specially trained neural networks.

17. A validating device (10) for validating a V2X message (3) sent by a transmitter (2) and received by a receiver (1), comprising an extraction unit (14), which is designed to determine a purported transmitter position (p2) of the transmitter (2) from the V2X message (3), wherein an analysis unit (15) is provided, which is designed to determine at least one actual physical received signal property (S, A) upon reception of the V2X message (2), **wherein** a geodata unit (13) is provided, which is designed to provide local environmental geodata, comprising a positioning of a number of stationary objects (O1, O2, O3, O4), **wherein** a simulation unit (12) is provided, which is connected to the extraction unit (14) and to the geodata unit (13) and is designed to simulate a signal path (x) of the V2X message (3) using the purported transmitter position (p2), the local environmental geodata and the known receiver position (P1) of the vehicle (1), and to determine at least one simulated physical received signal property from the simulated signal path (x) and the known receiver position (P1), **and wherein** a validation unit (11) is provided, which is connected to the simulation unit (12) and to the analysis unit (15) and is designed to validate the V2X message (3), if the at least one simulated physical received signal property differs from the at least one actual physical received signal property by less than a limit value (G).

18. The validation device (10) according to Claim 17, **wherein** a position-determination unit (16) is provided, which is designed to determine the receiver position (P1) of the receiver (1).

## Revendications

1. Procédé permettant la validation d'un message V2X (3) émis par un émetteur (2) et reçu par un récepteur (1), dans lequel le récepteur (1) est disposé sur un véhicule et, lors de la réception du message V2X (3), au moins une propriété de signal de réception physique réelle du message V2X (3) est déterminée et dans lequel une position d'émetteur (p2) prétendue de l'émetteur (2) est déterminée à partir du message V2X (3), dans lequel des données géographiques d'environnement locales, comprenant un positionnement d'un certain nombre d'objets stationnaires (O1, O2, O3, O4), sont mises à disposition, dans lequel un trajet de signal (x) du message V2X (3) est simulé à partir de la position d'émetteur (p2) prétendue en tenant compte des données géographiques d'environnement et de la position de récepteur (P1), dans lequel au moins une propriété de signal de réception physique simulée est déterminée à partir du trajet de signal (x) simulé et de la position de récepteur (P1), et dans lequel le message V2X (3) est validé dans la mesure où l'au moins une propriété de signal de réception physique simulée s'écarte de l'au moins une propriété de signal de réception physique réelle de moins d'une valeur limite (G).

2. Procédé selon la revendication 1, dans lequel une réflexion et/ou une diffraction et/ou une absorption du message V2X (3) sur les objets stationnaires (O1, O2, O3, O4) est prise en compte lors de la simulation du trajet de signal (x).

3. Procédé selon la revendication 2, dans lequel les données géographiques d'environnement local comprennent des propriétés d'objets physiques, de préférence des propriétés de réflexion et/ou des propriétés d'atténuation, des objets stationnaires (O1, O2, O3, O4).

4. Procédé selon l'une des revendications 1 à 3, dans lequel un angle de réception réel (A) est déterminé en tant qu'au moins une propriété de signal de réception physique et dans lequel un angle de réception simulé (a) est déterminé en tant qu'au moins une propriété de signal de réception physique simulée.

5. Procédé selon l'une des revendications 1 à 4, dans lequel une intensité de signal de réception réelle (S) est déterminée en tant qu'au moins une propriété de signal de réception physique et dans lequel une intensité de signal de réception simulée (s) est déterminée en tant qu'au moins une propriété de signal de réception physique simulée.

6. Procédé selon l'une des revendications 1 à 5, dans lequel la position d'émetteur (p2) prétendue est directement contenue dans le message V2X (3).

7. Procédé selon l'une des revendications 1 à 6, dans lequel la position d'émetteur (p2) prétendue est déduite d'informations contenues dans le message V2X (3).

8. Procédé selon l'une des revendications 1 à 7, dans lequel le message V2X (3) est déclaré invalide si l'au moins une propriété de signal de réception physique simulée diffère de l'au moins une propriété de signal de réception physique réelle d'au moins la valeur limite (G).

9. Procédé selon la revendication 8, dans lequel, en cas d'invalidation du message V2X (3), l'émetteur (2) est marqué comme n'étant pas fiable.

10. Procédé selon l'une des revendications 1 à 9, dans lequel la validation est effectuée plusieurs fois.

11. Procédé selon l'une des revendications 1 à 10, dans lequel une vitesse d'émetteur et/ou une accélération d'émetteur est déterminée à partir du message V2X, dans lequel une vitesse d'émetteur calculée et/ou une accélération d'émetteur calculée est déterminée à partir de la position d'émetteur (p2) prétendue de l'émetteur (2) et dans lequel le message V2X (3) est en outre validé lorsque la vitesse d'émetteur et/ou l'accélération d'émetteur s'écarte, de préférence de moins d'une autre valeur limite, de la vitesse d'émetteur et/ou de l'accélération d'émetteur calculée(s).

12. Procédé selon l'une des revendications 1 à 11, dans lequel, à l'aide des données géographiques d'environnement local et des propriétés de signal de réception physique réelles du message V2X (2), la position d'émetteur réelle de l'émetteur (2) est déterminée et comparée à la position d'émetteur prétendue de l'émetteur (2).

13. Procédé selon la revendication 12, dans lequel une vitesse d'émetteur réelle de l'émetteur (2) est déterminée à partir de la position d'émetteur réelle et est comparée à une vitesse prétendue de l'émetteur (2) contenue dans le message V2X (2).

14. Procédé selon l'une des revendications 1 à 13, dans lequel des capteurs du véhicule (1) sont utilisés pour vérifier au moins une partie des informations contenues dans le message V2X (3), de préférence au moins le type d'émetteur de l'émetteur (2).

15. Procédé selon l'une des revendications 1 à 14, dans lequel l'un des messages V2X (3) est un message V2V, de préférence un message de sensibilisation commun.

16. Procédé selon l'une des revendications 1 à 15, dans lequel le trajet de signal (x) simulé et/ou la propriété de signal de réception physique simulée est simulée à l'aide de modèles physiques et/ou stochastiques et/ou à l'aide de procédés d'approximation basés sur l'apprentissage automatique, de préférence des réseaux neuronaux spécialement entraînés.

17. Dispositif de validation (10) pour la validation d'un message V2X (3) émis par un émetteur (2) et reçu par un récepteur (1) disposé sur un véhicule, comprenant une unité d'extraction (14) qui est conçue pour déterminer une position d'émetteur (p2) prétendue de l'émetteur (2) à partir du message V2X (3), dans lequel une unité d'analyse (15) est prévue, qui est conçue, lors de la réception du message V2X (2), pour déterminer au moins une propriété de signal de réception physique réelle (S, A), dans lequel une unité de données géographiques (13) est prévue, qui est conçue pour mettre à disposition des données géographiques d'environnement locales, comprenant un positionnement d'un certain nombre d'objets stationnaires (O1, O2, O3, O4), dans lequel une unité de simulation (12) est prévue, qui est reliée à l'unité d'extraction (14) et à l'unité de données géographiques (13) et qui est conçue pour simuler un trajet de signal (x) du message V2X (3) à l'aide de la position d'émetteur (p2) prétendue, des données géographiques d'environnement locales et d'une position de récepteur connue (P1) du véhicule (1), et pour déterminer au moins une propriété de signal de réception physique simulée à partir du trajet de signal (x) simulé et de la position de récepteur connue (P1), et dans lequel une unité de validation (11) est prévue, qui est reliée à l'unité de simulation (12) et à l'unité d'analyse (15) et est conçue pour valider le message V2X (3) dans la mesure où l'au moins une caractéristique de signal de réception physique simulée s'écarte de l'au moins une caractéristique de signal de réception physique réelle de moins d'une valeur limite (G).

18. Dispositif de validation (10) selon la revendication 17, dans lequel une unité de localisation (16) est prévue, qui est conçue pour déterminer la position de récepteur (P1) du récepteur (1).
